# FASCICULE DE BREVET EUROPEEN

(11) **EP 0 958 989 B1**
(45) Date de publication et mention de la délivrance du brevet: **22.01.2003**
(21) Numéro de dépôt: 99401224.3
(22) Date de dépôt: 20.05.1999
(51) Int. Cl.: B62D 1/10, B62D 1/04

(54) **Ensemble de direction à coussin de volant fixe**
Lenkeinrichtung mit festem Lenkradprallkissen
Steering assembly with fixed steering wheel pad

(30) Priorité: 20.05.1998 FR 9806401
(43) Date de publication de la demande: 24.11.1999
(73) Titulaire: Renault s.a.s., 92100 Boulogne Billancourt (FR)
(72) Inventeur: Velay, Michel, 78640 Saint Germain de la Grange (FR)

(56) Documents cités:
- US-A- 4 409 584

## Description

La présente invention est relative à un ensemble de direction pour véhicule automobile.

Classiquement, un ensemble de direction pour véhicule automobile comporte une colonne de direction fixe, un arbre de direction monté rotatif à l'intérieur de cette colonne de direction, et un volant dont le moyeu est monté solidairement sur cet arbre de direction, ce moyeu étant relié à la périphérie du volant par une ou plusieurs branches.

De manière connue, le moyeu du volant peut être recouvert par un coussin de volant. Selon les cas, ce coussin de volant peut avoir une simple fonction décorative et/ou d'autres fonctions.

A titre d'exemple, un tel coussin peut renfermer une enveloppe gonflable telle qu'un AirBag (marque déposée), ou comporter à sa surface divers organes d'aide à la conduite tels qu'un écran fournissant certaines informations, ou des boutons de commande d'un récepteur radio.

Dans ces cas, il est intéressant d'envisager un coussin de volant fixe, c'est-à-dire un coussin de volant qui ne tourne pas avec le volant.

On trouve plusieurs exemples de coussins de volant fixes ou semi-fixes dans la technique antérieure.

Le brevet américain n° 4.485.371 décrit un ensemble de direction comprenant un coussin de volant monté rotatif sur l'arbre de direction, un mécanisme de différentiel étant interposé entre le coussin de volant et l'arbre de direction. Une rotation importante du volant entraîne ainsi une rotation de faible amplitude du coussin de volant.

Le brevet américain n° 4.541.301 décrit un ensemble de direction comprenant un coussin de volant monté rotatif sur l'arbre de direction et relié à la colonne de direction par un ressort hélicoïdal enroulé autour de l'arbre de direction. Le volant est relié à la colonne de direction par une branche susceptible de tourner en glissant le long des spires du ressort.

Le brevet américain n° 4.409.584 sert de base pour la présentation en deux parties de la revendication 1 et décrit un ensemble de direction comprenant un coussin de volant monté rotatif sur l'arbre de direction et une pluralité d'organes de verrouillage de ce coussin de volant montés sur la colonne de direction, chacun de ces organes étant mobile entre une position embrayée où il bloque la rotation de ce coussin, et une position débrayée où il est écarté de ce coussin par l'une des branches du volant. Ces organes de verrouillage sont disposés de sorte que quelle que soit la position du volant, au moins l'un d'eux soit en position embrayée.

Les ensembles de direction enseignés par ces brevets présentent l'inconvénient de nécessiter, pour assurer l'immobilité ou la semi-immobilité du coussin de volant, de nombreuses pièces et d'être coûteux à réaliser. Ils requièrent en outre un certain entretien.

La présente invention a pour but de fournir un ensemble de direction à coussin de volant fixe de conception particulièrement simple, afin de remédier aux inconvénients susmentionnés.

On atteint ce but de l'invention, ainsi que d'autres qui apparaîtront à la lecture de la description qui va suivre, avec un ensemble de direction pour véhicule automobile, comprenant:
- une colonne de direction,
- un arbre de direction monté rotatif à l'intérieur de cette colonne de direction,
- un volant dont le moyeu est monté solidairement sur ledit arbre de direction, ce moyeu étant relié à la périphérie dudit volant par au moins une branche,
- un coussin de volant monté rotatif sur l'extrémité dudit arbre de direction,
- au moins deux organes de verrouillage en position fixe dudit coussin de volant montés sur ladite colonne de direction, chacun de ces organes étant mobile entre une position embrayée où il bloque la rotation de ce coussin, et une position débrayée où il est écarté de ce coussin par ladite branche, ces organes de verrouillage étant disposés de sorte que, quelle que soit la position dudit volant, au moins l'un d'eux soit en position embrayée,
cet ensemble de direction étant remarquable en ce que lesdits organes de verrouillage sont des cames formées dans un matériau souple et élastique, l'une des extrémités de chacune de ces cames étant fixée sur ladite colonne de direction, et l'autre extrémité étant destinée à s'engager amoviblement dans un logement formé dans ledit coussin de volant afin de bloquer sa rotation.

Selon une autre caractéristique de l'ensemble de direction selon l'invention, lesdites cames sont formées dans une seule et même pièce d'un matériau souple et élastique, percée en son centre pour laisser passer ledit arbre de direction.

Grâce à ces caractéristiques, on obtient un ensemble de direction à coussin de volant fixe comportant un minimum de pièces, ce qui permet de le réaliser au moindre coût. Qui plus est, aucun entretien particulier n'est à prévoir par la suite.

D'autres caractéristiques et avantages de la présente invention apparaîtront à la lecture de la description qui va suivre et à l'examen du dessin annexé dans lequel:
- la figure 1 est une vue de face d'un mode de réalisation préféré d'un ensemble de direction conforme à l'invention, les branches du volant et une came de cet ensemble de direction étant représentées dans des première (trait continu) et deuxième (trait mixte) positions;
- la figure 2 est une vue selon la coupe II-II de l'ensemble de direction de la figure 1, les première et deuxième positions de ladite came étant également représentées respectivement en trait continu et en trait mixte.

Comme on peut le voir sur ces figures, l'ensemble de direction selon l'invention comprend un volant 1 comportant un moyeu 2.

Ce moyeu est relié à la périphérie 3 du volant par deux branches 4, 5 disposées sensiblement selon une corde du volant.

Le contour du moyeu 2 a sensiblement la forme d'une cloche, c'est-à-dire la forme d'une parabole ouverte en direction des branches 4, 5.

Les angles de liaison 6, 7 du moyeu 2 avec les branches 4, 5 sont arrondis.

Le moyeu 2 est monté solidairement sur un arbre de direction 8 et maintenu en place par exemple grâce à un écrou 9 en prise avec un filetage formé sur l'extrémité 10 de cet arbre.

L'arbre de direction 8 est monté rotatif à l'intérieur d'une colonne de direction 11 solidaire du châssis du véhicule automobile (non représentée).

L'extrémité (non représentée) de cet arbre opposée à l'extrémité 10 est destinée à actionner les roues directrices du véhicule automobile.

L'ensemble de direction selon l'invention comprend également un coussin de volant 15, de forme par exemple quasi-circulaire.

Ce coussin de volant comporte une embase rigide 16 destinée à être placée en vis-à-vis du moyeu 2.

Cette embase rigide comporte un orifice 17 en son centre, permettant de monter rotatif le coussin de volant 15 sur l'extrémité 10 de l'arbre de direction 8 grâce à une vis à tête large 18.

Cette embase rigide comporte en outre des premier 19 et deuxième 20 logements disposés de façon sensiblement symétrique par rapport à l'orifice 17.

La distance séparant ces deux logements est sensiblement égale à celle séparant les deux angles arrondis 6, 7.

L'embase rigide 16 supporte un matériau de remplissage 25, et/ou d'autres organes non représentés tels qu'une enveloppe gonflable telle qu'un AirBag (marque déposée), un ou plusieurs écrans, un ou plusieurs boutons de commande, etc.

Des moyens de réduction des frottements tels qu'un roulement à billes 26 sont interposés entre l'embase rigide 16 et le moyeu 2.

Selon une caractéristique essentielle de l'ensemble de direction selon l'invention, des moyens de verrouillage formés par deux cames 27, 28 en matériau souple et élastique, sont fixés sur le col 29 de la colonne de direction 11, par exemple grâce à des vis (non représentées).

Ces cames sont disposées de façon sensiblement symétrique par rapport à l'axe de rotation du volant 1, et leurs extrémités libres sont destinées à s'engager dans les logements 19, 20 formés dans l'embase rigide 16 (position embrayée).

Grâce à leur souplesse, ces cames peuvent être écartées des logements 19, 20 (position débrayée).

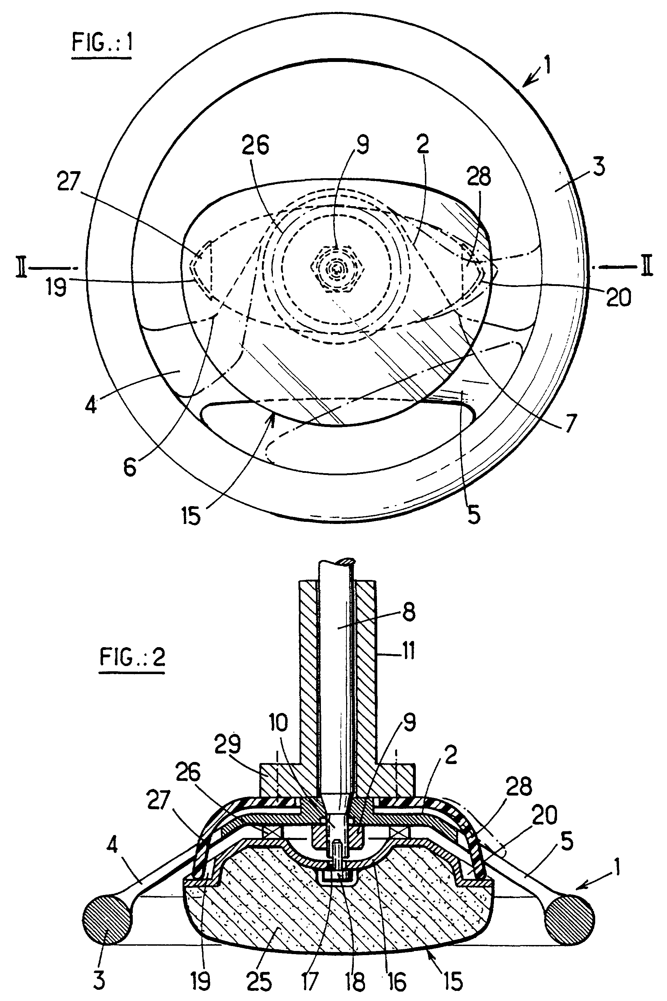

De manière préférée, et comme cela est représenté sur les figures 1 et 2, les deux cames 27, 28 forment une seule et même pièce percée en son centre pour laisser passer l'arbre de direction 8.

De manière préférée également, on fabriquera les cames 27, 28 dans une matière plastique telle que du polyéthylène.

Le fonctionnement de l'ensemble de direction selon l'invention découle directement de la description qui précède.

Pour fixer les idées, on suppose que l'on tourne le volant 1 dans le sens anti-horaire.

L'ensemble branches-moyeu passe par la position indiquée en trait mixte sur la figure 1, dans laquelle l'angle arrondi 7 bute contre la came 28.

Lorsque le volant continue de tourner dans le sens anti-horaire, l'angle arrondi 7 écarte la came 28 du logement 20 grâce à l'élasticité de cette came, jusqu'à la faire passer sous la branche 5 (voir représentations en trait mixte de cette came sur les figures 1 et 2).

Pendant que le volant continue de tourner dans le sens anti-horaire, la came 28 reste sous la branche 5, puis éventuellement sous la branche 4.

Lorsque l'angle arrondi 6 arrive au droit de la came 28, celle-ci revient s'engager dans le logement 20.

Pendant tout ce temps, la came 27 reste engagée dans le logement 19.

Si le volant poursuit sa rotation dans le sens anti-horaire, la came 27 effectue à son tour les mêmes mouvements que ceux qui viennent d'être décrits pour la came 28, tandis que la came 28 reste engagée dans le logement 20.

Si l'on tourne le volant dans le sens horaire, on obtient évidemment une succession d'étapes symétriques de celles décrites ci-dessus.

Ainsi, il y a toujours au moins l'une des deux cames 27, 28 qui se trouve en position embrayée, de sorte que le coussin de volant 15 est bloqué en rotation quelle que soit la position du volant 1.

On peut donc envisager de placer dans ou sur le coussin de volant 15 des organes qui doivent garder une orientation fixe par rapport au conducteur.

C'est le cas par exemple pour une enveloppe gonflable telle qu'un AirBag (marque déposée), a fortiori si son déploiement est prévu selon certaines directions privilégiées de l'espace.

C'est le cas également pour des organes tels qu'un écran d'affichage d'informations sur le trafic routier, ou tels que des boutons de commande d'appareils permettant d'actionner certaines fonctions (régulation de vitesse, réglage du récepteur radio, etc.).

S'il est nécessaire d'établir des connexions électriques entre ces organes et la colonne de direction, on pourra avantageusement utiliser des dispositifs de la technique antérieure, dont certains sont décrits dans les brevets cités dans le préambule de la présente demande de brevet.

Comme on peut le voir à présent, l'ensemble de direction selon l'invention est d'une conception très simple, et sa mise en oeuvre nécessite un faible nombre de pièces. En outre, il ne requiert aucun entretien particulier.

Bien entendu, l'invention n'est pas limitée au mode de réalisation décrit et représenté qui n'a été donné qu'à titre d'exemple.

C'est ainsi par exemple que le volant 1 pourrait ne comporter qu'une seule branche ou plus de deux branches.

C'est ainsi également que l'on pourrait mettre en oeuvre plus de deux cames, et notamment trois cames.

Dans ces variantes, il suffirait d'adapter les géométries et les dispositions respectives des branches et des cames, de manière que l'on ait au moins une came en position embrayée quelle que soit la position du volant.

C'est ainsi également que l'on pourrait substituer au roulement à billes 26 tout autre moyen permettant de réduire les frottements entre le coussin de volant 15 et le moyeu 2. De simples surfaces glissantes pourraient convenir.

## Revendications

1. Ensemble de direction pour véhicule automobile, comprenant:
- une colonne de direction (11),
- un arbre de direction (8) monté rotatif à l'intérieur de cette colonne de direction,
- un volant (1) dont le moyeu (2) est monté solidairement sur ledit arbre de direction, ce moyeu étant relié à la périphérie dudit volant par au moins une branche (4, 5),
- un coussin de volant (15) monté rotatif sur l'extrémité (10) dudit arbre de direction,
- au moins deux organes de verrouillage (27, 28) en position fixe dudit coussin de volant montés sur ladite colonne de direction, chacun de ces organes étant mobile entre une position embrayée où il bloque la rotation de ce coussin, et une position débrayée où il est écarté de ce coussin par ladite branche (4, 5), ces organes de verrouillage étant disposés de sorte que, quelle que soit la position dudit volant (1), au moins l'un d'eux soit en position embrayée,
**caractérisé en ce que** lesdits organes de verrouillage (27, 28) sont des cames formées dans un matériau souple et élastique, l'une des extrémités de chacune de ces cames étant fixée sur ladite colonne de direction, et l'autre extrémité étant destinée à s'engager amoviblement dans un logement (19, 20) formé dans ledit coussin de volant (15) afin de bloquer sa rotation.

2. Ensemble de direction selon la revendication 1, **caractérisé en ce que** lesdites cames (27, 28) sont formées dans une seule et même pièce de matériau souple et élastique, percée en son centre pour laisser passer ledit arbre de direction (8).

3. Ensemble de direction selon l'une quelconque des revendications 1 ou 2, **caractérisé en ce que** des moyens de réduction des frottements (26) sont interposés entre ledit coussin de volant (15) et ledit moyeu (2).

4. Ensemble de direction selon la revendication 3, **caractérisé en ce que** lesdits moyens de réduction des frottements (26) sont un roulement à billes.

5. Ensemble de direction selon l'une quelconque des revendications précédentes, **caractérisé en ce qu'**il comprend des première (27) et deuxième (28) cames disposées de façon sensiblement symétrique par rapport à l'axe de rotation dudit volant (1), ces cames étant destinées à s'engager respectivement dans des premier (19) et deuxième (20) logements formés dans ledit coussin de volant (15).

6. Ensemble de direction selon la revendication 5, **caractérisé en ce que** le moyeu (2) dudit volant (1) est en forme de cloche, et **en ce qu'**il est relié à la périphérie de ce volant par deux branches (4, 5) disposées sensiblement selon une corde de ce volant.

7. Ensemble de direction selon l'une quelconque des revendications précédentes, **caractérisé en ce que** ledit coussin de volant (15) renferme une enveloppe gonflable.

8. Ensemble de direction selon l'une quelconque des revendications précédentes, **caractérisé en ce que** ledit coussin de volant (15) comporte des organes tels qu'un écran d'affichage d'informations ou des boutons de commande d'appareils.

## Patentansprüche

1. Lenkeinrichtung für ein Kraftfahrzeug mit:
- einer Lenksäule (11),
- einer Lenkwelle (8), die drehbar im Inneren der Lenksäule angeordnet ist,
- einem Lenkrad (1), dessen Nabe (2) fest mit der Lenkwelle verbunden ist, wobei die Nabe mit dem Rand des Lenkrades über wenigstens eine Speiche (4, 5) verbunden ist,
- einem Prallkissen (15), das drehbar am Ende (10) der Lenkwelle angeordnet ist,
- wenigstens zwei Verriegelungsteilen (27, 28) für eine Feststellung des Prallkissens, die an der Lenksäule vorgesehen sind, wobei jedes dieser Teile zwischen einer eingerückten Stellung, in der die Verdrehung des Prallkissens blockiert wird, und einer ausgerückten Stellung, in der es durch die Speiche (4, 5) einen Abstand zum Kissen aufweist, beweglich sind und wobei die Verriegelungsteile derart angeordnet sind, dass unabhängig von der Stellung des Lenkrades (1) wenigstens eines von ihnen in der eingerückten Stellung ist,
**dadurch gekennzeichnet, dass** die Verriegelungsteile (27, 28) aus einem weichen und elastischen Kunststoff bestehende Nocken sind, wobei eines der Enden eines jeden Nockens an der Längssäule befestigt ist und das andere Ende in lösbarer Weise in eine Aussparung (19, 20) eingreift, die im Prallkissen (15) ausgebildet ist, um dessen Verdrehung zu blockieren.

2. Lenkeinrichtung nach Anspruch 1, dadurch gegekennzeichnet, dass die Nocken (27, 28) in einem einzigen weichen und elastischen Kunststoffteil ausgebildet sind, das in seiner Mitte eine Bohrung aufweist, die von der Lenkwelle (8) durchsetzt wird.

3. Lenkeinrichtung nach einem der Ansprüche 1 oder 2, **dadurch gekennzeichnet, dass** eine Anordnung (26) zur Verringerung der Reibung zwischen dem Prallkissen (15) und der Nabe (2) eingesetzt ist.

4. Lenkeinrichtung nach Anspruch 3, **dadurch gekennzeichnet, dass** die Anordnung (26) zur Verringerung der Reibung ein Kugellager ist.

5. Lenkeinrichtung nach einem der vorhergehenden Ansprüche, **dadurch gekennzeichnet, dass** sie einen ersten Nocken (27) und einen zweiten Nocken (28) aufweist, die im wesentlichen symmetrisch bezüglich der Drehachse des Lenkrades (1) angeordnet sind, wobei diese Nocken in eine erste Aussparung (19) bzw. eine zweite Aussparung (20) eingreifen, die im Prallkissen (15) ausgebildet sind.

6. Lenkeinrichtung nach Anspruch 5, **dadurch gekennzeichnet, dass** die Nabe (2) des Lenkrades (1) die Form einer Glocke aufweist und dass sie mit dem Umfang des Lenkrades über zwei Speichen (4, 5) verbunden ist, die im Wesentlichen segmentförmig ausgestaltet sind.

7. Lenkeinrichtung nach einem der vorhergehenden Ansprüche, **dadurch gekennzeichnet, dass** das Prallkissen (15) eine aufblasbare Hülle umschließt.

8. Lenkeinrichtung nach einem der vorhergehenden Ansprüche, **dadurch gekennzeichnet, dass** das Prallkissen (15) Bauteile aufweist, wie z.B. einen Anzeigeschirm für Informationen oder Steuerschalter für Geräte.

## Claims

1. Steering assembly for an automotive vehicle, comprising:
- a steering column (11),
- a steering shaft (8) rotatably mounted in the interior of said steering column,
- a steering wheel (1) the hub (2) of which is mounted integrally on said steering shaft, said hub being joined to the periphery of said steering wheel by at least one spoke (4, 5),
- a steering wheel pad (15) mounted rotatably on the extremity (10) of said steering shaft,
- at least two members (27, 28) for clamping said steering wheel pad in a fixed position, mounted on said steering column, each of said members being moveable between an engaged position where it blocks the rotation of said pad, and a disengaged position where it is separated from said pad by said spoke (4, 5), said clamping members being arranged such that whatever the position of said steering wheel (1) at least one of them is in the engaged position,
**characterised in that** said clamping members (27, 28) are cams formed from a supple and elastic material, one of the extremities of each of said cams being fixed onto said steering column, and the other extremity being intended to engage in a removable manner in a housing (19, 20) formed in said steering wheel pad (15) in order to block the rotation thereof.

2. Steering assembly according to claim 1, **characterised in that** said cams (27, 28) are formed from one and the same piece of supple and elastic material pierced at its centre in order to allow said steering shaft (8) to pass through.

3. Steering assembly according to any one of claims 1 or 2, **characterised in that** means for reducing friction (26) are interposed between said steering wheel pad (15) and said hub (2).

4. Steering assembly according to claim 3, **characterised in that** said friction reducing means (26) are a ball bearing.

5. Steering assembly according to any one of the preceding claims, **characterised in that** it comprises first (27) and second (28) cams arranged in a substantially symmetrical manner with respect to the axis of rotation of said steering wheel (1), said cams being intended to engage respectively in first (19) and second (20) housings formed in said steering wheel pad (15).

6. Steering assembly according to claim 5, **characterised in that** the hub (2) of said steering wheel (1) is in the shape of a bell, and **in that** it is connected to the periphery of said steering wheel by two spokes (4, 5) arranged substantially according to a chord of said steering wheel.

7. Steering assembly according to any one of the preceding claims, **characterised in that** said steering wheel pad (15) encloses an inflatable air bag.

8. Steering assembly according to any one of the preceding claims, **characterised in that** said steering wheel pad (15) comprises members such as a screen for showing information or buttons for controlling devices.
